# EUROPEAN PATENT APPLICATION

(11) **EP 1 246 168 A2**
(43) Date of publication of application: **02.10.2002**
(21) Application number: 01306319.3
(22) Date of filing: 23.07.2001
(51) Int. Cl.: G11B 5/39, G11B 5/00

(54) **Tunnel magneto-resistive head and manufacturing method thereof**

(30) Priority: 26.03.2001 JP 2001088614
(71) Applicant: FUJITSU LIMITED, Kawasaki-shi, Kanagawa 211-8588 (JP)
(72) Inventor: Zhang, Yigun, c/o Fujitsu Limited, Kawasaki-shi, Kanagawa 211-8588 (JP); Kikuchi, Hideyuki, c/o Fujitsu Limited, Kawasaki-shi, Kanagawa 211-8588 (JP); Hashimoto, Jun-ichi, c/o Fujitsu Limited, Kawasaki-shi, Kanagawa 211-8588 (JP); Kanamine, Michiaki, c/o Fujitsu Limited, Kawasaki-shi, Kanagawa 211-8588 (JP); Kanai, Hitoshi, c/o Fujitsu Limited, Kawasaki-shi, Kanagawa 211-8588 (JP)
(74) Representative: Hitching, Peter Matthew

(57) **Abstract**

A tunnel magneto-resistive head (200) includes a tunnel magneto-resistive film including an antiferromagnetic layer (105-2), a fixed magnetic layer (105), a tunnel insulating layer (104) and a free magnetic layer (103); hard layers (107) disposed at both sides of the tunnel magneto-resistive film for applying a bias magnetic field to the free magnetic layer; and deactivated parts (110) having an insulating property, providing as both end parts of the antiferromagnetic layer and/or the fixed magnetic layer.

## Description

### BACKGROUND OF THE INVENTION

### 1. Field of the Invention

The present invention relates to a tunnel magneto-resistive head and a manufacturing method thereof.

As a tunnel magneto-resistive head can have a high sensitivity for a recording medium having a high recording density, it in particular has attracted attention recently.

### 2. Description of the Related Art

A recording density of a magnetic information recording/reproducing device such as a hard-disk drive has been increased as rapidly as on the order of 2.5 times a year, and, to put a high MR-ratio tunnel magneto-resistive head (referred to as a TMR head, hereinafter) to practical use has become exigencies.

A tunnel magneto-resistive film (referred to as a TMR film, hereinafter) used in the above-mentioned TMR head has such a unique lamination structure that a manufacturing process thereof is complicated and difficult. Although many researchers have made studies for putting TMR head to practical use wholeheartedly, TMR head having a surface recording density of not less than 20 Gb/in² which is practically needed has not been achieved yet.

Generally speaking, the above-mentioned TMR film has a lamination structure including a free magnetic layer, a tunnel insulating layer, a fixed magnetic layer and a antiferromagnetic layer. In a TMR head employing a TMR film, similar to a case of employing a spin-valve layer, a structure having hard layers disposed on both sides of the above-mentioned free magnetic layer has been adopted, in order to reduce Barkhausen noise (BN).

However, in a case of TMR head, it is not possible to obtain a tunnel magneto-resistive effect when the above-mentioned fixed magnetic layer and free magnetic layer are electrically short-circuited. Therefore, a structure such that the fixed magnetic layer and free magnetic layer are positively insulated from one another is needed.

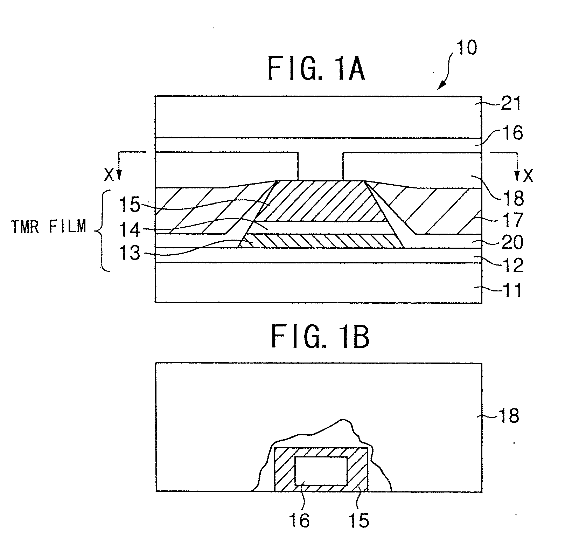

With reference to FIGS. 1A and 1B, a TMR head 10 proposed as the related art will now be described. FIG. 1A shows a lamination structure of the TMR head 10 while FIG. 1B shows a central part thereof by cutting off along arrows X-X of FIG. 1A.

As shown in the figures, in the TMR head 10, a TMR film is disposed on a lower metal gap 12 on a lower seed layer 1, and, above the TMR film, an upper metal gap 16, an insulating layer 18 and an upper seed layer 21 are laminated.

The above-mentioned TMR film has a lamination structure in which a free magnetic layer 13, a tunnel insulting layer 14, a fixed magnetic layer and a antiferromagnetic layer are laminated in the stated order from the bottom, and the free magnetic layer 13 is insulated from hard layers 17 by thin insulating layers 20 on both sides thereof. In this structure, as the free magnetic layer 13 and hard layers 17 are separated by the insulating layers 20, a bias effect from the hard layers 17 to the free magnetic layer 13 is attenuated unfortunately.

Through the specification, the layer obtained from combining the antiferromagnetic layer and fixed magnetic layer together as shown in FIG. 1A is referred to as a fixed layer, particularly. Accordingly, in FIGS. 1A and 1B, the TMR film consists of the free magnetic layer 13, tunnel insulating layer 14 and fixed layer 15.

In the TMR head 10 described above, a core width thereof is determined based on a width of the TMR film. When the core width is attempted to be reduced for the purpose of achieving high recording density of the head 10, the width of the free magnetic layer 13 of the TMR film should be reduced accordingly. However, when the free magnetic layer 13 detects an external magnetic field, a predetermined width thereof is needed for rotating the magnetization direction. When the width of the free magnetic layer 13 becomes less than this predetermined width, rotation of the magnetization direction is difficult to be performed, and, as a result, the sensitivity of the head is remarkably reduced.

In order to prevent such a problem from occurring, a structure of the TMR film such that, while the core width is reduced, the width of the free magnetic layer 13 is elongated.

Accordingly, in order to achieve a preferable TMR head, the following configuration is required: The width of the fixed layer 15 is reduced for reducing the core width, and, also, the free magnetic layer 13 is widened. Furthermore, the hard layers are disposed in a manner such that short circuit between the fixed magnetic layer and free magnetic layer is prevented, and, also, a bias magnetic field can be applied to the free magnetic layer satisfactorily.

In order to achieve such a TMR head, a manufacturing method called 'free magnetic layer remaining method' has been proposed.

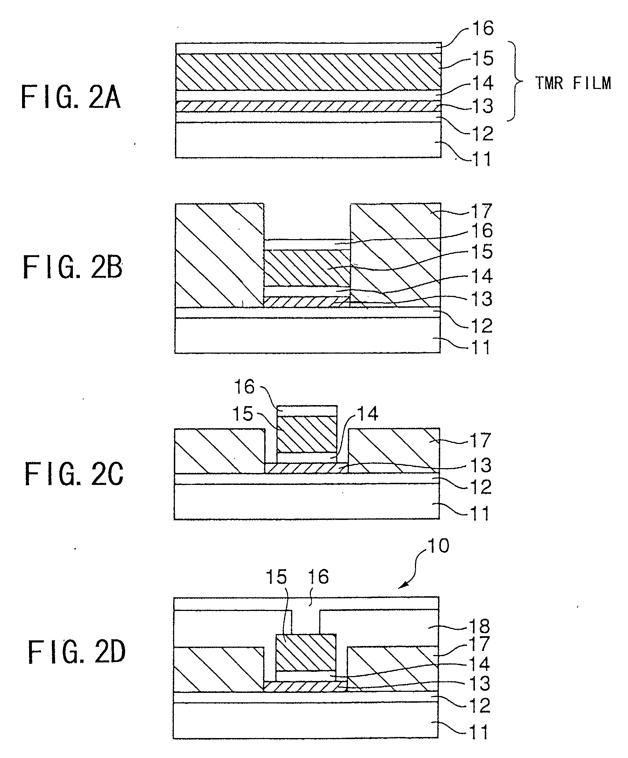

FIGS. 2A, 2B, 2C and 2D show respective processes of the above-mentioned free magnetic layer remaining method. According to this method, by using thin film removal technique such as milling, etching or the like, the fixed layer 15 (antiferromagnetic layer and fixed magnetic layer) located at the top of the TMR film is positively removed partly, while the free magnetic layer 13 underneath is left in a stable state.

In this method, as shown in FIGS. 2A and 2B, respective layers are formed, and the hard layers 17 are formed on both sides of the thus-formed TMR film. Then, as shown in FIG. 2C, removal working is performed until the tunnel insulating layer 14 formed between the fixed layer 15 and free magnetic layer 13 can be partly seen from the top, so that only the free magnetic layer 13 may be left there.

However, as the above-mentioned tunnel insulating layer 14 has a film thickness of less than 1 nm, it is difficult to positively stop the removal working immediately before the free magnetic layer 13 is reached, in an actual process. Further, even if such a difficult work can be achieved, repeatability thereof would be very low. If the removal working is performed also into the free magnetic layer 13, the free magnetic layer is exposed to the atmosphere, and, thereby, it is oxidized. If the free magnetic layer is oxidized, flow of a sense current therethrough is disturbed. If the TMR head 10 in a final mode shown in FIG. 2D has the oxidized free magnetic layer 13, this head may have a problem of a poor sensitivity.

### SUMMARY OF THE INVENTION

Accordingly, an object of the present invention is to provide a TMR head having a free magnetic layer wider than a fixed magnetic layer, and, having hard layers without a problem of short circuit, wherein a bias magnetic field can be satisfactorily applied to the free magnetic layer by the hard layers. Further, another object of the present invention is to provide a manufacturing method of this TMR head.

A tunnel magneto-resistive head according to the present invention comprises:
a tunnel magneto-resistive film including an antiferromagnetic layer, a fixed magnetic layer, a tunnel insulating layer and a free magnetic layer;
hard layers disposed at both sides of the tunnel magneto-resistive film for applying a bias magnetic field to the free magnetic layer; and
deactivated parts having an insulating property, provided as both end parts of the antiferromagnetic layer and fixed magnetic layer.

A tunnel magneto-resistive head according to another aspect of the present invention comprises:
a tunnel magneto-resistive film including an antiferromagnetic layer, a fixed magnetic layer, a tunnel insulating layer and a free magnetic layer;
hard layers disposed at both sides of the tunnel magneto-resistive film for applying a bias magnetic field to the free magnetic layer; and
deactivated parts having an insulating property, provided as both end parts of the fixed magnetic layer.

In each of the above-described configurations, while the fixed magnetic layer and so forth has a substantially reduced film width, the width of the free magnetic layer is maintained as being wide, and, also, the hard layers having no problem of short circuit can apply the bias magnetic field to the free magnetic layer. Such a magnetic head can reproduce information recorded onto a magnetic information recording medium such as a hard disk at high density, at high sensitivity

In each of the above-mentioned configurations, the deactivated parts may be formed as a result of, after the tunnel magneto-resistive film is formed, insulating processing performed on the both end parts of the antiferromagnetic layer and fixed magnetic layer so as to make them to have the insulating property.

Further, the insulating processing may comprise oxidation processing giving the insulating property to at least the fixed magnetic layer.

Furthermore, the hard layers may be oxidized at the top thereof so that hard layer oxidized parts are formed.

In each of the above-mentioned configurations, the fixed magnetic layer and/or the antiferromagnetic layer have the central part thereof having the original magnetic property maintained with the both end parts thereof having the insulating property. Accordingly, it is possible to achieve a configuration such as to have a substantially reduced core width with the film width at the time of film formation maintained. Thus, as the free magnetic layer has the original film width, it is possible to provide a predetermined width thereof for performing magnetization rotation. Furthermore, as at least the end parts of the fixed magnetic layer have the insulating property, short circuit with the free magnetic layer does not occur in a configuration such that the free magnetic layer comes into contact with the hard layers and thereby the bias magnetic field can be applied to the free magnetic layer satisfactorily.

It is preferable that the above-mentioned insulating processing comprises the oxidation processing which can be easily performed. As the oxidation processing, plasma oxidation, oxygen ion implantation, or the like may be employed.

A manufacturing method of a tunnel magneto-resistive head according to the present invention comprises the steps of:
a) forming a tunnel magneto-resistive film including an antiferromagnetic layer, a fixed magnetic layer, a tunnel insulating layer and a free magnetic layer;
b) forming hard layers at both sides of the tunnel magneto-resistive film for applying a bias magnetic field to the free magnetic layer; and
c) forming deactivated parts having an insulating property, as both end parts of the antiferromagnetic layer and fixed magnetic layer.

A manufacturing method of a tunnel magneto-resistive head according to another aspect of the present invention comprises the steps of:
a) forming a tunnel magneto-resistive film including an antiferromagnetic layer, a fixed magnetic layer, a tunnel insulating layer and a free magnetic layer;
b) forming hard layers at both sides of the tunnel magneto-resistive film for applying a bias magnetic field to the free magnetic layer; and
c) forming deactivated parts having an insulating property, as both end parts of the fixed magnetic layer.

In each of the above-mentioned methods, the step c) may comprise the step of d) performing insulating processing on the both end parts of the antiferromagnetic layer and fixed magnetic layer so as to make them to have the insulating property.

Further, the thickness of the hard layers may be previously set larger for allowing to be oxidized at the top thereof simultaneously in the step d).

In each of the above-described methods, by utilizing semiconductor fine working technique and oxidation processing technique in the related art, the tunnel magneto-resistive head can be manufactured in which, while the fixed magnetic layer and so forth are formed to have a substantially reduced film width for the purpose of providing a reduced core width of the head, the width of the free magnetic layer is formed large, and, also, the hard layers having no problem of short circuit can apply the bias magnetic field to the free magnetic layer. Especially, by adopting the method of allowing the top of the hard layers to be oxidized, it is possible to effectively simplify the process.

Further, according to the present invention, a magnetic information reproducing device has the tunnel magneto-resistive head in any of the above-described configurations, loaded therein. This magnetic information reproducing device can reproduce magnetic information recorded a magnetic recording medium at high recording density, at high sensitivity.

Other objects and further features of the present invention will become more apparent from the following detailed description when read in conjunction with the accompanying drawings.

### BRIEF DESCRIPTION OF THE DRAWINGS

FIGS. 1A and 1B show a TMR head in the related art;
FIGS. 2A through 2D show respective processes of a free magnetic layer remaining method in the related art;
FIG. 3 shows a general configuration of a TMR head in a first embodiment of the present invention;
FIGS. 4A through 4E show respective processes of manufacturing the TMR head shown in FIG. 3;
FIG. 5 shows a general configuration of a TMR head in a second embodiment of the present invention;
FIGS. 6A and 6B show respective processes of manufacturing the TMR head shown in FIG. 5;
FIG. 7 shows a general configuration of a TMR head in a third embodiment of the present invention;
FIGS. 8A through 8C show respective processes of manufacturing the TMR head shown in FIG. 7; and
FIG. 9 shows a general configuration of a magnetic information recording/reproducing device having the TMR head shown in FIG. 3 loaded therein.

### DETAILED DESCRIPTION OF THE PREFERRED EMBODIMENTS

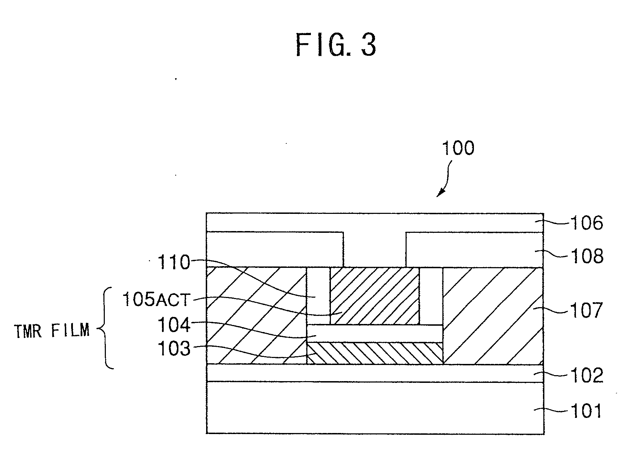

FIG. 3 shows a side elevational sectional view of a general configuration of a TMR head 100 in a first embodiment of the present invention. In FIG. 3, the TMR head 100 includes a lower seed layer 101 and a lower metal gap 102 which also serves as an electrode. A TMR film is disposed on the lower metal gap 102 at the center thereof. The TMR film has a lamination structure having a free magnetic layer 103, a tunnel insulating layer 104 and a fixed layer 105 (including a fixed magnetic layer and an antiferromagnetic layer) laminated therein in the stated order from the bottom.

In the TMR film, the free magnetic layer 103 and tunnel insulating layer 104 have a longer width, while the fixed layer 105 thereabove has a shorter width, as shown in the figure. At both ends of the fixed layer 105, deactivated fixed layers 110 are disposed

The above-mentioned deactivated fixed layers 110 are parts at both ends of the fixed layer 105 when the film is formed, and, as a result of insulating processing being performed thereon so as to cause them to have an insulating property, they are deactivated. That is, although the deactivated fixed layers 110 are integral with the fixed layer 105, they are denatured so as to have the insulating property through the insulating processing performed thereon. In comparison therewith, a central part of the fixed layer 105 which has a magnetization left can be called an active fixed layer 105ACT.

Accordingly, although, apparently, the active fixed layer 105ACT and deactivated fixed layers 110 are the integral fixed layer 105, only the central active fixed layer 105ACT functions as the antiferromagnetic layer and fixed magnetic layer. Thus, the active fixed layer 105ACT corresponds to the core width of the TMR head. Thereby, in the TMR head 100 in the present embodiment, as a result of the deactivated fixed layers 110 being formed as mentioned above, the reduced core width is achieved. However, as the free magnetic layer 103 is maintained to have the film width (along horizontal direction in the figure) of the condition where the film is formed, the free magnetic layer 103 is wider than the active fixed layer 105ACT having the reduced width. Accordingly, by providing the film width such that the free magnetic layer 103 can perform satisfactory magnetization rotation, at the time of forming the film, it is possible to achieve the preferable magnetic head having the reduced core width. A method of forming the above-mentioned deactivated fixed layers 110 will be described later.

The hard layers 107 are formed at both ends of the above-mentioned deactivated fixed layers 110. The hard layers 107 are directly in contact with the ends of the wider free magnetic layer 103. Accordingly, a bias magnetic field is positively applied to the free magnetic layer 103 thereby. Further, the above-mentioned deactivated fixed layers 110 are inserted between the hard layers 107 and the active fixed layer 105ACT. Accordingly, no problem of short circuit between the free magnetic layer 103 and the fixed magnetic layer of the active fixed layer 105ACT occurs.

In the top of the TMR head 100, an insulating layer 108 and an upper metal gap 106 also acting as an electrode are formed same as in the TMR head in the related art.

As can be seen from the above, according to the TMR head 100 in the present embodiment, the structure is achieved, which has been considered as being difficult in the related art, such that the active fixed layer 105ACT and so forth are formed to have the reduced width so as to achieve the reduced core width, while the free magnetic layer 103 is formed to be wide, and, also, the hard layer 107 is disposed in a manner such that, while short circuit between the fixed magnetic layer and free magnetic layer is avoided, a bias magnetic field can be positively applied to the free magnetic layer by the hard layers. This TMR head 100 can reproduce, at high sensitivity, information recorded onto a magnetic recording medium such as a hard disk at high density.

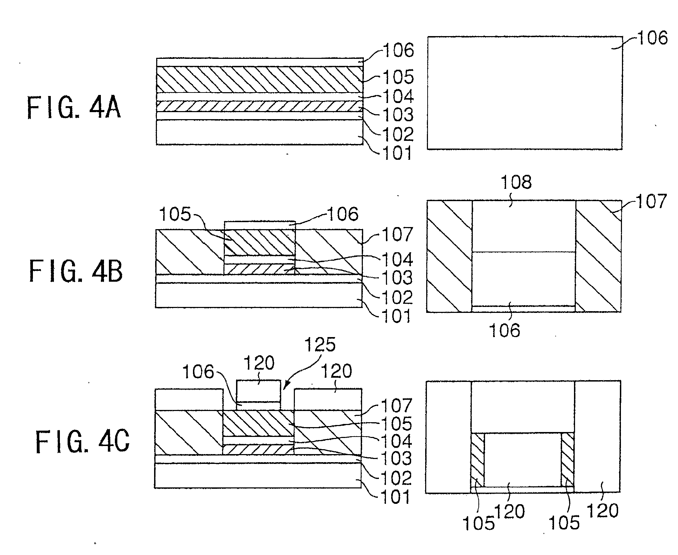

FIGS. 4A through 4E show manufacturing processes of the above-mentioned TMR head 100 in the first embodiment of the present invention, in sequence. In each of the processes shown in FIGS. 4A through 4E, a front view of a layer configuration is shown on the left, while a plan view is shown on the right.

FIG. 4A shows a process of forming a lamination body through sputtering or the like. This lamination body has the lower seed layer 101, lower metal gap 102, free magnetic layer 103, tunnel insulating layer 104, fixed layer 105 and upper metal gap 106 formed in a lamination manner in the stated order from the bottom.

FIG. 4B shows a process of forming the hard layers 107 for applying the bias magnetic field to the free magnetic layer 103, at both ends.

FIG. 4C shows a process of removing both end parts of the metal gap 106 by using resist 120 in order to form holes 125 having a width corresponding to the deactivated fixed layers 110 to be formed at both end parts of the fixed layer 105.

The processes shown in FIGS. 4A through 4C are performed through semiconductor fine working technique, i.e., for example, film formation technique such as sputtering, plating and/or the like, removal technique such as etching, milling and/or the like, and development technique.

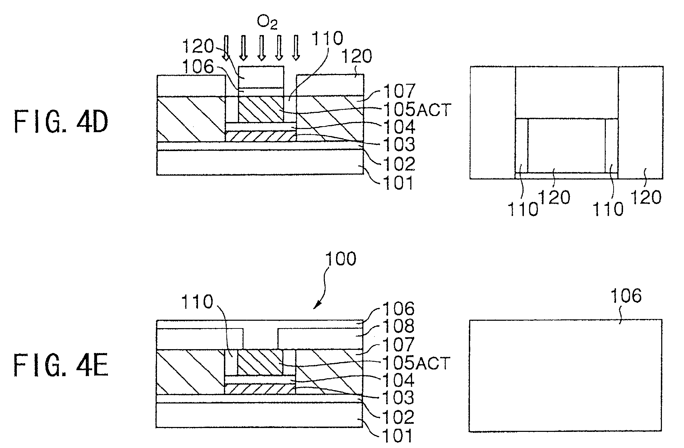

FIG. 4D shows a process of making the both end parts of the fixed layer 105 become the deactivated layers 110. Deactivation is performed through insulating processing being performed, after the parts other than the parts to be made to be the deactivated fixed layers 110 are protected by resist 120. As this insulating processing, it is preferable to employ oxidation processing. In the oxidation processing, it is possible to use plasma oxidation technique, natural oxidation technique, or the like, or oxygen ion implantation technique. Preferably, by using the plasma oxidation technique or oxygen ion implantation technique having anisotropy, for processing the both end parts of the fixed layer 105 into the deactivated layers 110. By adopting these oxidation techniques, as the oxidation goes in direction of film thickness, the central part of the fixed layer 105 which should be left as the active fixed layer 105ACT is hardly oxidized. However, as the width of the active fixed layer 105ACT is determined by the resulting core width, it becomes not possible to ignore diffusion of oxygen toward both sides of the active fixed layer occurring in the oxidation processing, when the core width is to be reduced extremely as the density of recording performed by the head is to be further increased. In such a case, the width of the central resist is determined for protecting the active fixed layer 100ACT in consideration of possible lateral oxygen diffusion depth. For example, the width of the central resist may be (core width + lateral oxygen diffusion depth x 2).

In the oxidation technique such as plasma oxidation or the like, although the oxidation rate (on the order of 2 nm on natural oxidation; or, on plasma oxidation, depending on the output power) is high initially, it becomes lower as the position becomes far away from the surface. Accordingly, it is easy to control the oxidation depth in comparison to the above-mentioned free magnetic layer remaining method in the related art. In other words, it is possible to positively avoid a situation in which also the free magnetic layer 103 is oxidized.

Further, it is possible to control the depth of the deactivated fixed layers 110 with an accuracy on the order of nanometers in forming it through ion implantation technique, after forming the holes 125, with high accuracy for forming the TMR film and deactivated fixed layers through most advanced semiconductor fine working technique.

Finally, in a process shown in FIG. 4E, a contact hole is formed after the insulating layer 108 is formed, and, then, the upper metal gap 106 is formed through film formation. Thus, the TMR head 100 shown in FIG. 3 is manufactured.

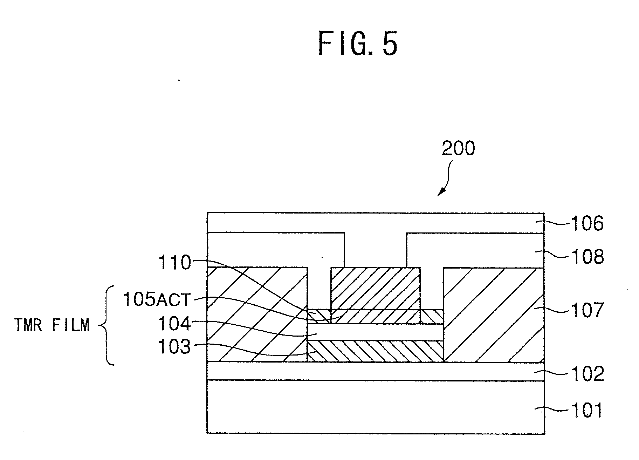

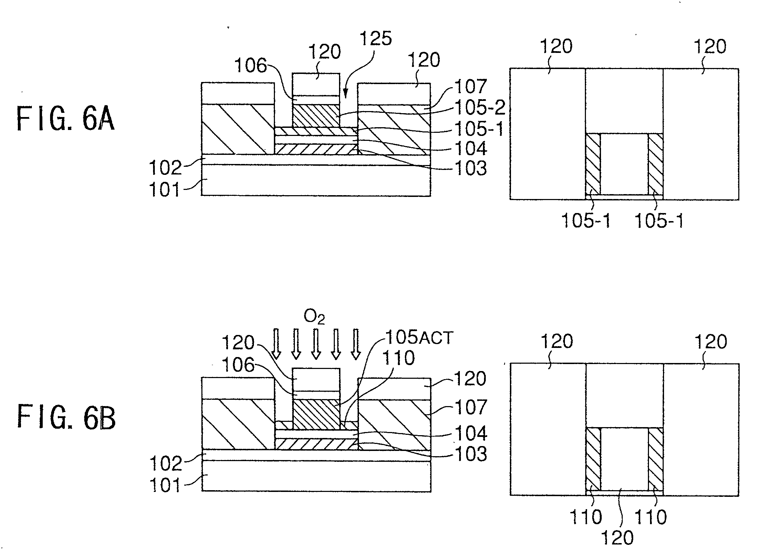

With reference FIGS. 5 and 6A, 6B, a second embodiment of the present invention will now be described. FIG. 5 shows a side elevational sectional view of a general configuration of a TMR head 200 in the second embodiment, while FIGS. 6A and 6B show manufacturing processes of the TMR head 200. In this TMR head 200, only end parts of the fixed magnetic layer of the fixed layer 105 are made to be the deactivated fixed layers 110.

Also in FIGS. 5 and 6A, 6B showing the second embodiment, the same reference numerals as those of the above-described first embodiment are given to the corresponding parts.

The deactivated fixed layers 110 of the TMR head 200 shown in FIG. 5 are formed as a result of previously removing the antiferromagnetic layer at end parts of the fixed layer 105 through etching or the like, and oxidizing, as in the first embodiment, but only the end parts of the fixed magnetic layer.

In this configuration, as the regions to be oxidized so as to be made deactivated are reduced, the processes can be simplified. Also in the case of the TMR head 200, as the deactivated layers 110 are provided as the end parts of the fixed magnetic layer, short circuit with the free magnetic layer 105 can be positively avoided.

The process of removing the antiferromagnetic layer at both end parts of the fixed layer 105 should not necessarily be performed at high accuracy as in the free magnetic layer remaining method in the related art. Even if the antiferromagnetic layer remained at the both end parts of the fixed layer 105, or the fixed magnetic layer were also removed there, adjustment therefor could be made in the subsequent process of oxidation for forming the deactivated fixed layers. Thus, no problem occurs.

FIGS. 6A and 6B show manufacturing processes of the TMR head 200. However, as the process of forming the lamination body through film formation (FIG. 4A), the process of forming the hard layers at both ends of the TMR film (FIG. 4B) and the last process (FIG. 4E) for the TMR head 200 are approximately the same as those of the first embodiment described above, duplicated description will be omitted.

FIG. 6A shows a process of forming the holes 125 having the width corresponding to the deactivated fixed layers to be formed, and FIG. 6B shows a process of making the both end parts of the fixed layer 105 become the deactivated fixed layers 110.

In the process shown in FIG. 6A of forming the holes 125, the metal gap 106 is removed by using resist 120, and, also, the both end parts of the antiferromagnetic layer 105-2 of the fixed layer 105 are removed. The time at which the removal of the antiferromagnetic layer 105-2 is completed is set as the ending point of milling or etching.

Then, in the process shown in FIG. 6B of forming the deactivated fixed layer 110, the both end parts of the fixed magnetic layer 105-1 of the fixed layer 105 are oxidized, and, thus, are made to have an insulating property.

In the processes shown in FIGS. 6A and 6B, it is preferable that removal is performed up to the antiferromagnetic layer 105-2 of the fixed layer 105 in prior to the process of forming the deactivated fixed layers 110, and, after that, the both end parts of the left fixed magnetic layer 105-1 are oxidized through natural oxidation, plasma oxidation with weak power, or the like.

Natural oxidation or plasma oxidation with weak power is effective around the surface (depth on the order of 2 through 3 nm). Accordingly, if even a part of the fixed magnetic layer 105-1 is removed in the previous process, it is possible to avoid a situation that also the free magnetic layer 103 is oxidized, as the tunnel insulating layer 104 exists below the fixed magnetic layer 105-1. Thus, in removing the end parts of the antiferromagnetic layer 105-2, control of milling or etching therefor should not necessarily be performed strictly in comparison to the free magnetic layer remaining method in the related art.

In the above-mentioned process, in order to leave the active fixed layer 105ACT at the center with complete oxidization of the end parts of the fixed magnetic layer 105-1 of the fixed layer 105, it is preferable to perform plasma oxidation with weak power with applying a low bias to the substrate.

Also in the TMR head 200 in the second embodiment, the free magnetic layer 103 is formed to be wider while the active fixed layer 105ACT is made narrower. Further, the hard layers 107 are disposed in a manner such that short circuit between the fixed magnetic layer 105-1 and free magnetic layer 103 is prevented. Accordingly, also this TMR head 200 can reproduce information recorded onto a magnetic recording medium such as a hard disk at high density, at high sensitivity.

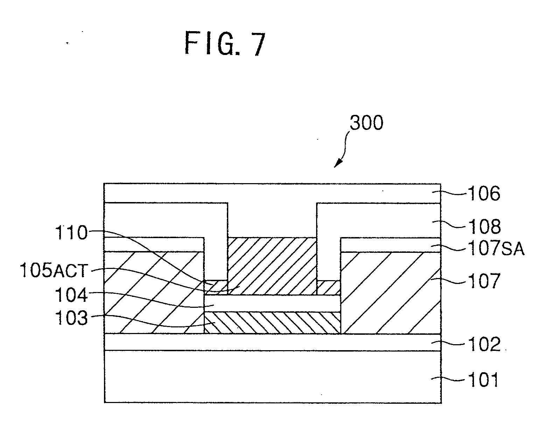

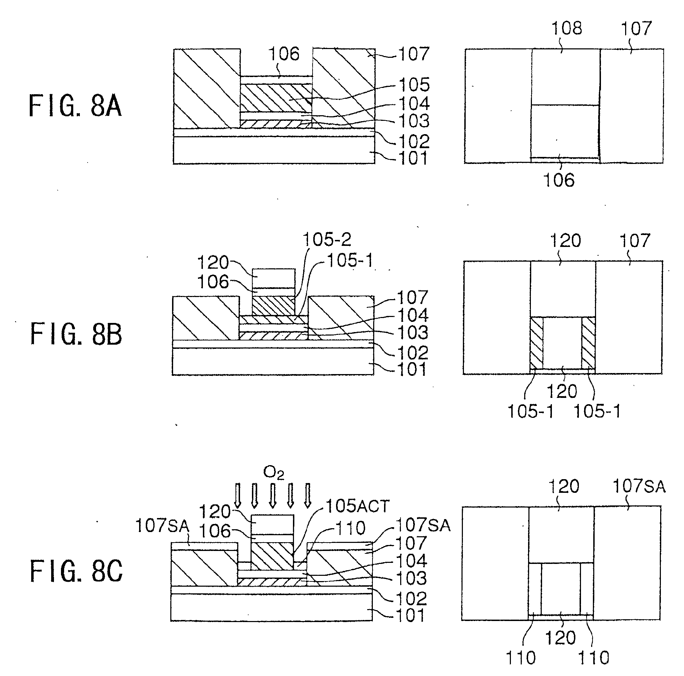

FIGS. 7 and 8A through 8C show a third embodiment of the present invention. FIG. 7 shows a side elevational sectional view of a TMR head 300 in the third embodiment, and FIGS. 8A through 8C show manufacturing processes of the TMR head 300. In the TMR head 300, only both end parts of the fixed magnetic layer 105-1 of the fixed layer 105 are made to be the deactivated fixed layers 110. Accordingly, it is similar to the above-described second embodiment, and, can be manufactured according to approximately the same processes as those of the second embodiment.

However, the TMR head 300 is different from the TMR head 200 in the second embodiment in that the surface of the hard layers 107 are oxidized in the TMR head 300. This difference is caused from the manufacturing processes which will now be described. Also for the third embodiment, the same reference numerals as those of the above-described first embodiment are given to corresponding parts.

The deactivated layers 110 of the TMR head 300 shown in FIG. 7 is made to have an insulating property as a result of removal being made up to both end parts of the antiferromagnetic layer of the fixed layer 105 through etching or the like, and, only both end parts of the fixed magnetic layer being oxidized as in the first embodiment.

However, in the third embodiment, the hard layers 107 are not protected by resist 120 when the above-mentioned oxidization is performed. Accordingly, with formation of the deactivated fixed layers 110, hard layer oxidized parts 107SA are formed simultaneously at the top of the hard layers 107.

Specifically, in the third embodiment, also top parts of the hard layers 107 are removed through milling or the like when the holes 125 are formed for the deactivated fixed layers 110. Further, they are also oxidized simultaneously when the both end parts of the fixed magnetic layer 105-1 are oxidized. Thereby, the thickness of the hard layers 107 at the time of film formation is previously set as being thicker in consideration of undergoing the above-mentioned processing to be performed after that.

When the TMR head 300 is manufactured, the process can be simplified as the regions to become the deactivated fixed layers through oxidation are reduced, as in the case of manufacturing of the TMR head 200. Further, as the protecting of the hard layers by resist can be omitted as mentioned above, it is possible to simplify the work of process.

Also in the case of the TMR head 300, as the deactivated fixed layers 110 are provided at both end parts of the fixed magnetic layer, short circuit with the free magnetic layer 103 can be positively avoided.

FIGS. 8A through 8C show manufacturing processes of the TMR head 300. However, the process of forming the lamination body by film formation (FIG. 4A) and the last process (FIG. 4E) are the same as those of the first embodiment, duplicated description will be omitted.

FIG. 8A shows a process of forming the hard layers 107, FIG. 8B shows a process of forming the holes 125 having a width corresponding to the deactivated fixed layers, and FIG. 8C shows a process of making the both end parts of the fixed magnetic layer of the fixed layer 105 become the deactivated layers 110.

In the process of FIG. 8A of forming the hard layers 107, the hard layers 107 are formed to have a thickness further larger than in the case of the second embodiment, in consideration of being partially removed in the subsequent process, and, also, being oxidized.

In the process of FIG. 8B of forming the holes 125, the both end parts of the metal gap 106 are removed by using resist 120, and, also, the both end parts of the antiferromagnetic layer 105-2 of the fixed layer 105 are removed. In this occasion, the hard layers 107 are not protected by resist, and the tops thereof are allowed to be removed simultaneously. Thereby, the film thickness of the hard layers 107 is reduced accordingly.

Then, in the process of FIG. 8C of forming the deactivated fixed layers 110, the both end parts of the fixed magnetic layer 105-1 of the fixed layer 105 are oxidized. At this occasion, also the top surfaces of the hard layers 107 are oxidized simultaneously, and, thereby, the hard layer oxidized parts 107SA are formed.

In the last process subsequent to the process of FIG. 8C, the insulating layer 108 is formed, and, then, the resist 120 is lifted off. Thereby, a contact hole is formed automatically.

Thus, it is possible to replace the process of forming the contact hole in the insulating layer 108 by the easier process of merely lifting off the resist 120. Finally, the metal gap 106 is formed by film formation, and, thus, the TMR head 300 shown in FIG. 7 is manufactured.

Also in the TMR head 300 in the third embodiment, the free magnetic layer 103 is formed to be wider while the active fixed layer 105ACT is made narrower. Further, the hard layers 107 are disposed in a manner such that short circuit between the fixed magnetic layer 105-1 and free magnetic layer 103 is prevented. Accordingly, also this TMR head 300 can reproduce information recorded onto a magnetic recording medium such as a hard disk at high density, at high sensitivity.

In the third embodiment, removal is performed up to the both end parts of the antiferromagnetic layer 105-2 of the fixed layer 105, and, only the both end parts of the fixed magnetic layer 105-1 are made to be the deactivated fixed layers 110, same as in the second embodiment.

However, in a case where, in the process of FIG. 8B, only the metal gap 106 is removed through milling at the both end parts thereof, and then oxidation processing is performed in the process of FIG. 8C, it is possible to, correspondingly to the case of the first embodiment, make all the fixed layer 105 (including the fixed magnetic layer 105-1 and antiferromagnetic layer 105-2) to be the deactivated fixed layers 110 at the both end parts thereof. In this case, as the antiferromagnetic layer 105-2 is not removed at both ends, it is possible to set a reduced amount of increase of the film thickness of the hard layers 107 at the time of film formation thereof in comparison to the third embodiment described above with reference to FIGS. 8A through 8C.

The above-described embodiments are the TMR heads 100 through 300 each of which reproduces a signal magnetic field from a magnetic recording medium at high sensitivity. However, it is possible to achieve a recording/reproducing head by combining any of these heads with a conventional inductive-type thin-film head.

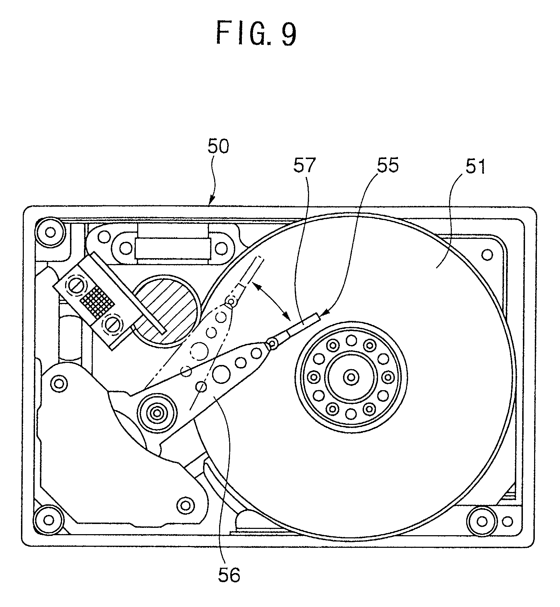

A magnetic information recording/reproducing device in which the TMR head 100 in the first embodiment is loaded will now be described briefly. FIG. 9 roughly shows a plan view of this magnetic information recording/reproducing device. This magnetic information recording/reproducing device 50 has a hard disk 51 serving as a recording medium loaded therein, which is driven to be rotated. A composite magnetic head 55 having the TMR head 100 in the first embodiment serving as a reading head, for example, floats by a predetermined floating amount above and faces a surface of this hard disk 51. Thereby, magnetic reproducing operation for magnetic information is performed thereon. This composite magnetic head 55 is fixed onto a front end part of a slider 57 which is provided on a projecting end of an arm 56. Positioning of the composite magnetic head 55 is performed by using a two-stage-type actuator in which a normal actuator and an electromagnetic fine-movement actuator are combined.

It is also possible to configure a magnetic information reproducing device which employs only the TMR head 100 according to the present invention.

Further, the present invention is not limited to the above-described embodiments, and variations and modifications may be made without departing from the scope of the present invention.

The present application is based on Japanese priority application No. 2001-088614, filed on March 26, 2001, the entire contents of which are hereby incorporated by reference.

## Claims

1. A tunnel magneto-resistive head comprising:
a tunnel magneto-resistive film comprising an antiferromagnetic layer (105-2), a fixed magnetic layer (105-1), a tunnel insulating layer (104) and a free magnetic layer (103);
hard layers (107) disposed at both sides of said tunnel magneto-resistive film for applying a bias magnetic field to said free magnetic layer; and
deactivated parts (110) having an insulating property, provided as both end parts of said antiferromagnetic layer and fixed magnetic layer.

2. A tunnel magneto-resistive head comprising:
a tunnel magneto-resistive film comprising an antiferromagnetic layer (105-2), a fixed magnetic layer (105-1), a tunnel insulating layer (104) and a free magnetic layer (103);
hard layers (107) disposed at both sides of said tunnel magneto-resistive film for applying a bias magnetic field to said free magnetic layer; and
deactivated parts (110) having an insulating property, provided as both end parts of said fixed magnetic layer.

3. The tunnel magneto-resistive head as claimed in claim 1, wherein:
said deactivated parts are formed as a result of, after said tunnel magneto-resistive film is formed, insulating processing being performed on the both end parts of said antiferromagnetic layer and fixed magnetic layer so as to make them to have the insulating property.

4. The tunnel magneto-resistive head as claimed in claim 2, wherein:
said deactivated parts are formed as a result of, after said tunnel magneto-resistive film is formed, insulating processing being performed on the both end parts of said fixed magnetic layer so as to make them to have the insulating property.

5. The tunnel magneto-resistive head as claimed in claim 3, wherein the insulating processing comprises oxidation processing giving the insulating property to the both end parts of said fixed magnetic layer.

6. The tunnel magneto-resistive head as claimed in claim 4, wherein the insulating processing comprises oxidation processing giving the insulating property to the both end parts of said fixed magnetic layer.

7. The tunnel magneto-resistive head as claimed in claim 5, wherein said hard layers are oxidized at the top thereof so that hard layer oxidized parts are formed.

8. The tunnel magneto-resistive head as claimed in claim 6, wherein said hard layers are oxidized at the top thereof so that hard layer oxidized parts are formed.

9. A manufacturing method of a tunnel magneto-resistive head comprising the steps of:
a) forming a tunnel magneto-resistive film comprising an antiferromagnetic layer (105-2), a fixed magnetic layer (105-1), a tunnel insulating layer (104) and a free magnetic layer (103);
b) forming hard layers (107) at both sides of said tunnel magneto-resistive film for applying a bias magnetic field to said free magnetic layer; and
c) forming deactivated parts (110) having an insulating property, as both end parts of said antiferromagnetic layer and fixed magnetic layer.

10. A manufacturing method of a tunnel magneto-resistive head comprising the steps of:
a) forming a tunnel magneto-resistive film comprising an antiferromagnetic layer (105-2), a fixed magnetic layer (105-1), a tunnel insulating layer (104) and a free magnetic layer (103);
b) forming hard layers (107) at both sides of said tunnel magneto-resistive film for applying a bias magnetic field to said free magnetic layer; and
c) forming deactivated parts (110) having an insulating property, as both end parts of said fixed magnetic layer.

11. The method as claimed in claim 9, wherein said step c) comprises the step of d) performing insulating processing on the both end parts of said antiferromagnetic layer and fixed magnetic layer so as to make them to have the insulating property.

12. The method as claimed in claim 10, wherein said step c) comprises the step of d) performing insulating processing on the both end parts of said fixed magnetic layer so as to make them to have the insulating property.

13. The method as claimed in claim 11, wherein the thickness of said hard layers is previously set larger for allowing to be oxidized at the top thereof simultaneously in said step d).

14. The method as claimed in claim 12, wherein the thickness of said hard layers is previously set larger for allowing to be oxidized at the top thereof simultaneously in said step d).

15. A magnetic information reproducing device comprising the tunnel magneto-resistive head claimed in claim 1, loaded therein.

16. A magnetic information reproducing device comprising the tunnel magneto-resistive head claimed in claim 2, loaded therein.
